# EUROPÄISCHE PATENTANMELDUNG

(11) **EP 1 718 047 A1**
(43) Veröffentlichungstag der Anmeldung: **02.11.2006**
(21) Anmeldenummer: 06008468.8
(22) Anmeldetag: 25.04.2006
(51) Int. Cl.: H04M 1/60

(54) **Freisprechanlage für Mobiltelefone und Steuergerät hierfür**

(30) Priorität: 26.04.2005 DE 102005019661; 19.08.2005 DE 102005039588
(71) Anmelder: Bury Sp.z.o.o, 39 300 Mielec (PL)
(72) Erfinder: Piekarz, Roman, 39300 Mielec (PL)
(74) Vertreter: Lins, Edgar

(57) **Zusammenfassung**

Eine Freisprechanlage für Mobiltelefone, mit einer eine Kontakteinheit aufweisenden Halterung (2), die über eine Kontakteinheit eine Verbindung zu einem Mobiltelefon herstellt und die mit einer Zentraleinrichtung verbunden ist, an die externe Einrichtungen anschließbar sind, erlaub eine komfortable Handhabung ohne eine Ausbildung der Zentraleinrichtung mit einer eigenen Telefonsende- und -empfangseinheit dadurch, dass in die Halterung (2) ein Steuergerät (1) einsetzbar ist, das eine Erkennungseinrichtung für SIM-Daten des Mobiltelefons und eine eigene Telefonsende- und Empfangseinheit aufweist und über die Kontakteinheit der Halterung (2) mit einer Stromversorgung und mit den an die Zentraleinrichtung anschließbaren externen Einrichtungen verbindbar ist.

## Beschreibung

Die Erfindung betrifft eine Freisprechanlage für Mobiltelefone, mit einer eine Kontakteinheit aufweisenden Halterung, die über die Kontakteinheit eine Verbindung zu einem Mobiltelefon herstellt und die mit einer Zentraleinrichtung verbunden ist, an die externe Einrichtungen anschließbar sind. Die Erfindung betrifft ferner ein Steuergerät für eine derartige Freisprechanlage.

Freisprechanlagen, wie sie insbesondere in Kraftfahrzeugen eingesetzt werden, werden im Allgemeinen fest in das Fahrzeug eingebaut und mit einer geeigneten Fahrzeugantenne, einem Lautsprecher und ggf. einem Mikrofon sowie ggf. sonstigen Steuereinrichtungen (z.B. zum Stummschalten eines Radios während eines Telefonats) verbunden. Zur Freisprecheinrichtung gehört dabei eine vom Fahrzeuginnenraum sichtbare Halterung, über deren Kontakteinheit die Verbindung zu einem externen Mobiltelefon herstellbar ist. Da unterschiedliche Mobiltelefontypen im Gebrauch sind, ist es bei gebräuchlichen Systemen üblich, spezifische, an die Mobiltelefone angepasste taschenartige Telefonhalter zu verwenden, die die Mobiltelefone aufnehmen und kontaktieren können. Diese Telefonhalter sind zur Aufnahmeseite hin somit spezifisch an einen Mobiltelefontyp angepasst, während andererseits eine universelle Kontakteinheit vorgesehen ist, die mit der Kontakteinheit der im Auto befestigten Halterung zusammenwirken kann. Somit gelingt der Anschluss unterschiedlicher Mobiltelefontypen an die fest im Fahrzeug installierte Freisprecheinrichtung dadurch, dass entsprechende verschiedene Telefonhalter als Adapter benutzt werden. Diese Telefonhalter sind somit bezüglich ihrer Kontakteinheit und bezüglich ihrer mechanischen Formgebung so ausgebildet, dass alle unterschiedlichen Telefonhalter mit derselben Halterung mechanisch und elektrisch zusammenwirken können.

Da Mobiltelefone häufig mit einer drahtlosen Datenkommunikationseinrichtung, regelmäßig nach dem Bluetooth-Standard, versehen sind, ist eine derartige Bluetooth-Kommunikationsverbindung zwischen Mobiltelefon und Freisprecheinrichtung benutzt worden, um über den Lautsprecher und das Mikrofon der Freisprecheinrichtung ein Telefongespräch des Mobiltelefons zu führen. Das Telefongespräch wird über die Datenkommunikationseinrichtung vom Telefon zur Freisprecheinrichtung übertragen, und zwar sowohl bezüglich der Audioverbindung als auch bezüglich der Steuerung. Eine derartige Anlage hat den Vorteil, dass das Mobiltelefon nicht mehr in einen Telefonhalter eingesteckt werden muss, sondern beispielsweise in einer Tasche des Benutzers verbleiben kann, da die Verbindung zur fest in das Auto eingebauten Freisprecheinrichtung drahtlos erfolgt. Nachteilig ist dabei allerdings, dass während des Gesprächs die drahtlose Kommunikationsverbindung mit einer großen Auslastung aufrecht erhalten werden muss, sodass hieraus ein hoher Energiebedarf des Telefons resultiert. Eine Ladung des Telefons, beispielsweise über ein an einen Zigarettenanzünder angeschlossenes Kabel, ist dabei unverzichtbar. Nachteilig ist femer, dass die Sendeleistung durch das Mobiltelefon erbracht werden muss und dass das Mobiltelefon über die eigene eingebaute Antenne sendet und empfängt, was eine hohe Strahlenbelastung innerhalb des Fahrzeugs zur Folge hat und häufig einen schlechteren Empfang bedeutet. Es ist daher bekannt, auch bei diesen Anlagen eine Haltevorrichtung vorzusehen, mit der das Laden des Mobiltelefons und ggf. auch eine Verbindung zu einer Außenantenne realisiert werden kann.

Für Erstausstattungen von Fahrzeugen ist es ferner bekannt, eine Freisprecheinrichtung vorzusehen, mit der das Mobiltelefon über die drahtlose Kommunikationsverbindung nur bezüglich der Daten der SIM-Karte (Identifikation und auf der SIM-Karte gespeicherte Daten, wie Telefonbücher, empfangene SMS usw.) nach dem sogenannten rSAP-Standard (remote SIM access profile) kommuniziert. Dabei ist im Mobiltelefon lediglich die Bluetooth-Verbindung mit einem relativ niedrigen Leistungsverbrauch aktiv, während die leistungsintensiveren Funktionen, wie Senden und Empfangen des Telefongesprächs oder einer Datensignalübertragung über das Telefonnetz abgeschaltet sind. Demgemäß muss die fest in das Fahrzeug eingebaute Freisprecheinrichtung quasi als komplettes Telefon ausgebildet sein. Dies hat den Nachteil, dass ein aufwändiger Einbau in das Fahrzeug erforderlich ist und dass in der Freisprecheinrichtung ein quasi vollständiges Telefon verbaut ist, das nur zusammen mit dem Fahrzeug benutzbar ist.

Der vorliegenden Erfindung liegt die Aufgabe zugrunde, eine komfortable Benutzung eines Mobiltelefons mit einer eingebauten Freisprechanlage zu ermöglichen, ohne für die Freisprechanlage eine komplette Telefoneinrichtung verbauen zu müssen.

Diese Aufgabe wird erfindungsgemäß mit einer Freisprechanlage der eingangs erwähnten Art dadurch gelöst, dass in die Halterung ein Steuergerät einsetzbar ist, das eine Erkennungseinrichtung für SIM-Daten des Mobiltelefons und eine eigene Telefonsende- und -empfangseinheit aufweist und über die Kontakteinheit der Halterung mit einer Stromversorgung und mit den an die Zentraleinrichtung anschließbaren externen Einrichtungen verbindbar ist.

Vorzugsweise enthält das Steuergerät dabei eine drahtlose Datenkommunikationseinrichtung zur Herstellung einer direkten drahtlosen Kommunikationsverbindung zu einem eine entsprechende Datenkommunikationseinrichtung aufweisenden Mobiltelefon.

Das erfindungsgemäße Steuergerät ermöglicht eine komfortable Benutzung des Mobiltelefons dadurch, dass das Mobiltelefon nicht mehr körperlich mit der Freisprechanlage verbunden - also beispielsweise in einen Halter eingesteckt - werden muss. Die Durchführung des Telefonats geschieht statt mit dem Mobiltelefon mit dem Steuergerät in Verbindung mit der Freisprechanlage, wobei das Steuergerät kein fester Teil der Freisprechanlage ist. Das Steuergerät ist vielmehr in eine Halterung einsetzbar, wie sie für die Aufnahme von für Mobiltelefone spezifischen Haltern bekannt und benutzt worden ist. Dadurch ist es möglich, das Steuergerät aus einem Fahrzeug zu entfernen und in einem anderen Fahrzeug einzusetzen, in dem eine übliche Freisprechanlage, d.h. ohne Bluetooth-Funktion, eingebaut ist. Der Einsatz des Steuergeräts kann daher anstelle eines bisher üblichen Halters für ein Mobiltelefon erfolgen. Eine an ein Mobiltelefon angepasste Halterung wird erfindungsgemäß nicht benötigt.

Das Steuergerät kann vorzugsweise ein Display zum Eingeben von Steuerbefehlen aufweisen, wobei das Display sich nahezu über eine gesamte Oberfläche des Steuergeräts erstrecken kann, um eine komfortable Displayfunktion zu ermöglichen, Die Größe des Displays beträgt dabei vorzugsweise mehr als 2/3 einer großen Oberfläche des Steuergeräts.

Die in dem Steuergerät enthaltene Erkennungseinrichtung für die SIM-Daten des Mobiltelefons kann an die Datenkommunikationseinrichtung angeschlossen sein, sodass die SIM-Daten über die drahtlose Datenkommunikationsverbindung übertragen werden. Das Steuergerät ist dann wirksam geschaltet, solange sich das zugehörige Mobiltelefon in der direkten drahtlosen Kommunikationsverbindung zu dem Steuergerät befindet. Wird das Mobiltelefon in eine größere Entfemung zum Steuergerät verbracht, sodass die drahtlose Kommunikationsverbindung abbricht, schaltet das Steuergerät ab und das Mobiltelefon funktioniert ― außerhalb des Fahrzeugs ― in herkömmlicher Weise.

Es ist allerdings auch möglich, die Erkennungseinrichtung für die SIM-Daten des Mobiltelefons als eigenen SIM-Kartenleser auszubilden, um beispielsweise mit einer Twinkarte der SIM-Karte des Mobiltelefons betrieben zu werden. In diesem Fall kann das Steuergerät auch dann mit den Daten des Mobiltelefons betrieben werden wenn sich das Mobiltelefon selbst nicht in einer Funkreichweite befindet.

Das Steuergerät ist vorzugsweise in die Halterung durch Rastung einsetzbar und arretierbar und kann daher durch Entarretierung wieder leicht entnommen werden. Die erfindungsgemäßen Vorteile lassen sich dadurch besonders leicht realisieren.

Ein erfindungsgemäßes Steuergerät der eingangs erwähnten Art ist dadurch gekennzeichnet, dass das Steuergerät zum unmittelbaren Einsetzen in die Halterung und zum Kontaktieren der Kontakteinheit der Halterung mittels einer entsprechenden Kontakteinheit ausgebildet ist, dass es eine Erkennungseinrichtung für SIM-Daten eines Mobiltelefons und eine eigene Telefon-sende- und -empfangseinheit aufweist und über die Kontakteinheit der Halterung mit einer Stromversorgung und mit den an die Zentraleinrichtung anschließbaren externen Einrichtungen verbindbar ist. Vorzugsweise ist das Steuergerät nach der Entnahme aus der Halterung als vollständiges Mobiltelefon einsetzbar.

Die vorliegende Erfindung ermöglicht somit, dass das Steuergerät, das als in die Halterung einsteckbares universelles Steuergerät für eine Freisprecheinrichtung konzipiert ist, als selbstständiges Zweittelefon zu einem Mobiltelefon verwendbar ist, dessen SIM-Daten auf das Steuergerät drahtlos über eine Bluetooth-Verbindung oder vorzugsweise mittels einer zweiten SIM-Karte zu denselben SIM-Daten übertragen werden.

In bestimmten Bauformen kann es zweckmäßig sein, wenn für das Steuergerät ein Zusatzteil vorgesehen ist, das zur Abdeckung der Kontakteinheit des Steuergeräts mit dem Steuergerät verbindbar ist. Auf diese Weise können die sonst nach außen offenen Kontakte der Kontakteinheit abgedeckt werden und das Gehäuse des Steuergeräts durch das Zusatzteil zu einem komplett handhabbaren Gehäuse des außerhalb der Halterung selbstständig verwendbaren Mobiltelefons ergänzt werden.

Das Zusatzteil kann dabei wenigstens ein Funktionsteil enthalten, mit dem das Steuergerät zu einem vollständigen Mobiltelefon ergänzt wird. Ein derartiges Zusatzteil ist beispielsweise eine Antenne für das Senden und Empfangen der Telefonate. Gegenüber einer im Steuergerät selbst eingebauten Antenne vermittelt die im Zusatzteil eingebaute Antenne den Vorteil, dass diese Antenne nur wirksam wird, wenn das Steuergerät aus der Halterung herausgenommen ist. Ist das Steuergerät in die Halterung eingesetzt, ist es mit der externen Antenne, beispielsweise Autoantenne, über die Zentraleinrichtung der Freisprechanlage verbunden. Demgemäß entfällt die Notwendigkeit einer Umschaltung zwischen einer im Steuergerät befindlichen internen Antenne und der an die Zentraleinrichtung Antenne und der an die Zentraleinrichtung angeschlossenen Antenne, wenn das Steuergerät in die Halterung eingesetzt ist.

Das Zusatzteil kann ferner als Funktionsteil einen Akkumulator enthalten, mit dem eine Stromversorgung für das Steuergerät allein bewirkt wird, wenn das Steuergerät über keinen eigenen Akkumulator verfügt, oder eine Unterstützung der Stromversorgung des Steuergeräts durch den eigenen Akkumulator nach der Entnahme des Steuergeräts aus der Halterung vorgenommen wird. Der in dem Steuergerät untergebrachte Akkumulator bietet den Vorteil, dass er über die durch die Verbindung mit der Zentraleinrichtung angeschlossene Stromversorgung, beispielsweise des Kraftfahrzeugs, bei dem in die Halterung eingesetzten Steuergerät ständig aufladbar ist.

Das erfindungsgemäße Steuergerät ist vorzugsweise selbst mit einem Mikrofon und einem Lautsprecher versehen, obwohl Mikrofon und Lautsprecher auch in dem Zusatzteil angeordnet sein können.

Das Zusatzteil kann auch mit einer Eingabetastatur für das Steuergerät ausgestattet sein, damit das Steuergerät unabhängig von dem Mobiltelefon benutzbar ist. Da das Steuergerät vorzugsweise mit einem Display, insbesondere einem großflächigen Display, das sich praktisch über die gesamte Vorderseite des Steuergeräts erstreckt, ausgestattet ist, kann das Display auch, vorzugsweise als Touch Screen, zur Eingabe von Daten und/oder Befehlen ausgebildet sein.

Das Steuergerät ist vorzugsweise in die Halterung durch Rastung einsetzbar und arretierbar und kann daher durch Entarretierung wieder leicht entnommen werden, um dann ggf. als vollwertiges Mobiltelefon verwendet zu werden.

Das das Steuergerät komplettierende Zusatzteil kann darüber hinaus die Funktion eines Ständers für das Steuergerät ausüben, sodass das aus der Halterung entnommene Steuergerät mit dem Zusatzteil auf einer ebenen Platte abstellbar ist. Vorzugsweise ist das Zusatzteil mit einem derart ausklappbaren Gehäuseteil versehen, dass nach dem Ausklappen des Gehäuseteils die vorher nicht gegebene Ständerfunktion gewährleistet ist.

Die Erfindung soll im Folgenden anhand von eines in der Zeichnung dargestellten Ausführungsbeispiels näher erläutert werden. Es zeigen:
- Figur 1: eine perspektivische Ansicht schräg von vom eines erfindungsgemäßen Steuergeräts vor einer in ein Fahrzeug eingebauten Halterung;
- Figur 2: die Anordnung gemäß Figur 1 mit dem in die Halterung eingesetzten Steuergerät;
- Figur 3: eine perspektivische Ansicht schräg von hinten auf das aus der Halterung entnommene Steuergerät gemäß Figur 1 mit einem das Steuergerät ergänzenden Zusatzteil;
- Figur 4: eine perspektivische Ansicht schräg von vorn rechts auf ein weiteres Ausführungsbeispiel eines erfindungsgemäßen Steuergeräts mit aufgeschobenem Zusatzteil;
- Figur 5: eine perspektivische Ansicht auf das Steuergerät gemäß Figur 4 schräg von vorn links;
- Figur 6: eine Seitenansicht eines weiteren Ausführungsbeispiels eines erfindungsgemäßen Steuergeräts mit aufgeschobenem Zusatzteil;
- Figur 7: eine Seitenansicht gemäß Figur 6 mit einem aus dem Zusatz teil herausgeklappten Gehäuseteil, durch das das Zusatzteil zugleich als Ständer für das Steuergerät fungiert.

Ein erfindungsgemäßes Steuergerät 1 ist so ausgebildet, dass es mit einer in ein Fahrzeug eingebauten Halterung 2 mechanisch und elektrisch zusammenwirken kann.

Die Halterung 2 ist mit einem Aufnahmeraum 3 ausgebildet, der an der Oberseite durch eine nach oben verschiebbare Abschlusswandung 4 begrenzt ist, die einen hakenförmig vorspringenden Abschnitt 5 aufweist. Eine untere Begrenzung des Aufnahmeraums 3 wird durch eine taschenförmige Ausgestaltung 6 bewirkt, in der ein nach unten nach einer Entriegelung verschiebbares Sperrelement 7 angeordnet ist. Das Sperrelement 7 gibt nach seiner Verschiebung eine in der taschenförmigen Ausgestaltung 6 angeordnete Kontakteinheit frei.

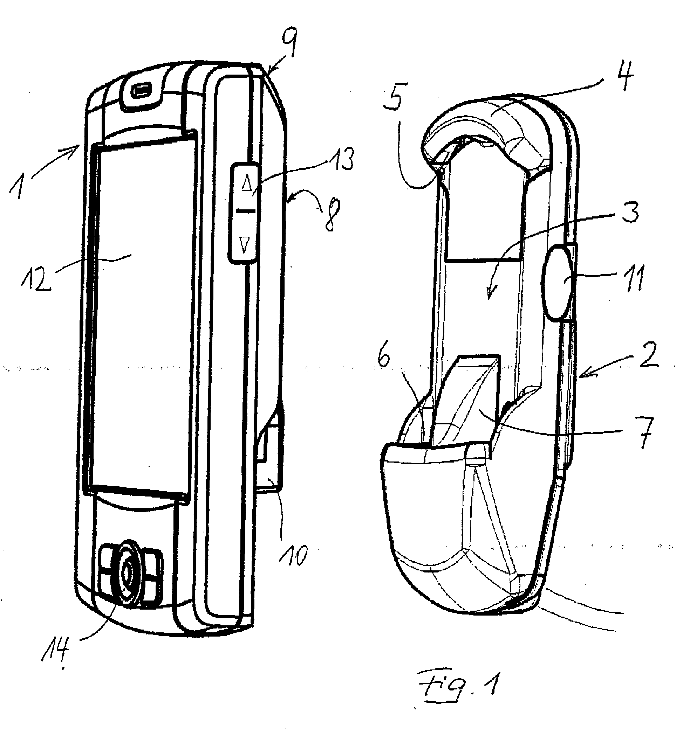

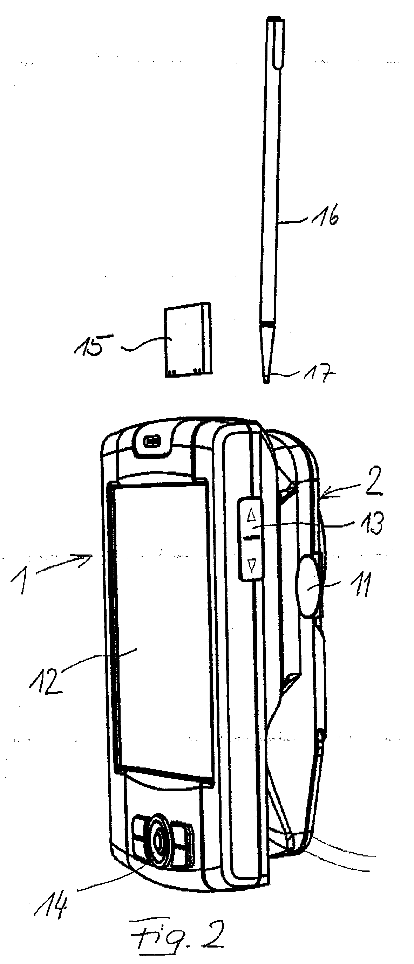

In entsprechender Weise ist das Steuergerät 1 auf seiner Rückseite mit einem Ansatz 8 versehen, der an seiner Oberseite eine hinterschnittene Nut 9 und an seiner Unterseite einen mit einer (verdeckten) Kontakteinheit versehenen Vorsprung 10 aufweist. Das Steuergerät 1 ist somit in die Halterung 2 dadurch einsetzbar, dass mit der hinterschnittenen Nut am oberen Ende des Ansatzes 8 die obere Wandung 4 der Halterung nach oben geschoben wird, um das untere Ende 10 in den Aufnahmeraum 3 einführen zu können. Durch das Verschieben des Steuergeräts 1 nach unten wird die obere Wandung 4 in die Ausgangsposition zurück verschoben und dort verriegelt. Gleichzeitig wird das Sperrelement 7 verschoben und die komplementär zueinander ausgebildeten Kontakteinheiten von Steuergerät 1 und Halterung 2 kontaktieren einander. Die montierte Stellung von Steuergerät 1 und Halterung 2 ist in Figur 2 dargestellt. Die Entnahme des Steuergeräts 1 aus der Halterung 2 ist nach Entriegelung über eine Entriegelungstaste 11 möglich, indem zunächst die obere Wandung 4 mit dem Steuergerät 1 nach oben geschoben wird, wodurch der Ansatz 10 aus der taschenförmigen Ausgestaltung 6 der Halterung 2 frei kommt.

Das Steuergerät 1 ist an seiner Frontseite mit einem großflächigen Display 12 versehen, das zur Eingabe von Daten mit einer Menüführung dient. Hierzu kann das Display auch als Touch-Screen ausgebildet sein.

An einer Seitenwandung des Steuergeräts 1 befindet sich eine Steuerwippe 13, mit der insbesondere die Lautstärke der Wiedergabe über den an die Freisprecheinrichtung angeschlossenen Lautsprecher des Kraftfahrzeugs oder über einen in das Steuergerät 1 eingebauten Lautsprecher steuerbar ist.

Unterhalb des Displays 12 befindet sich eine Bedienungseinrichtung 14, mit der eine Cursorsteuerung und ein Anklicken von auf dem Display 12 dargestellten Wählelementen möglich ist.

Figur 2 verdeutlicht noch, dass das Steuergerät 1 zur Aufnahme einer Speicherkarte 15 vorgesehen ist, also einen entsprechenden Aufnahmeschlitz und einen Speicherkartenleser aufweist.

Ferner ist das Gehäuse des Steuergeräts 1 mit einer Einsteckaufnahme für einen Stift 16 versehen, mit dessen Spitze 17 die Eingabe auf dem als Touch Screen ausgebildeten Display 12 möglich ist.

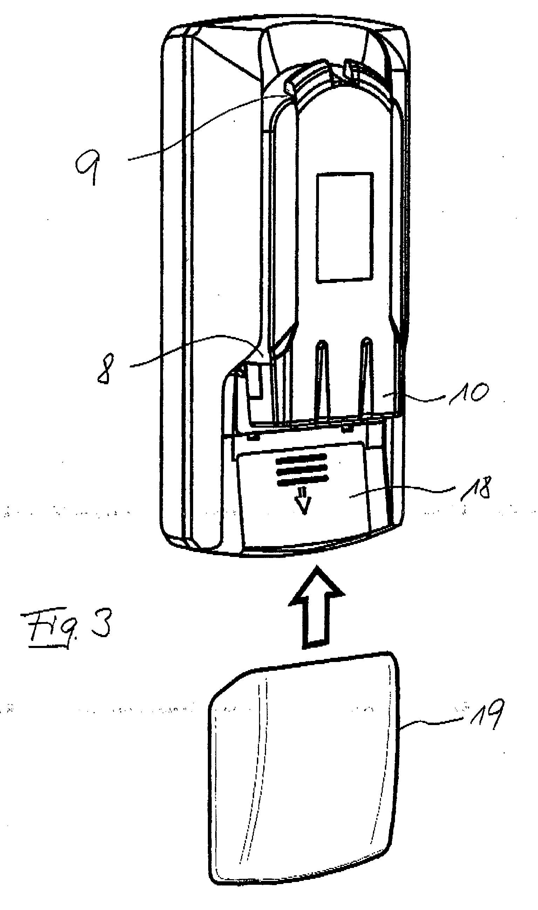

Die in Figur 3 dargestellte Rückseite des Steuergeräts 1 lässt unterhalb des Vorsprungs 10 ein Aufnahmefach 18 für einen Akkumulator erkennen, der über die vom Vorsprung 10 verdeckte Kontaktanordnung und über den Halter durch die Verbindung mit der Spannungsquelle des Kraftfahrzeugs aufladbar ist. In das Aufnahmefach 18 kann in an sich bekannter Weise unter dem Akkumulator noch eine (nicht dargestellte) Aufnahmeeinrichtung für eine SIM-Karte vorgesehen sein.

Der untere Abschnitt des Gehäuses des Steuergeräts 1 auf der Rückseite ist zur Anpassung an den entsprechenden unteren Vorsprung der Halterung 2 durch eine Ausnehmung gebildet. Diese ist durch ein Zusatzteil 19 ausfüllbar, das von unten auf das Gehäuse des Steuergeräts 1 aufschiebbar und dort anrastbar ist. Das Zusatzteil 19 ist in dem hier dargestellten einfachsten Fall mit einer Mobilfunkantenne (GSM-Antenne) versehen, die über die Kontaktanordnung des Steuergeräts 1 anschließbar ist. In dem dargestellten Ausführungsbeispiel ist das Steuergerät mit einem eigenen Mikrofon und einem eigenen Lautsprecher versehen und darüber hinaus über das als Touch Screen ausgebildete Display 12 unmittelbar ansteuerbar. Demgemäß wird dieses Steuergerät bereits durch das mit der Mobilfunkantenne versehene Zusatzteil 19 zu einem vollständigen Mobiltelefon ergänzt. Das Steuergerät 1 kann somit nach Einsetzen der SIM-Karte, die auch eine eigenständige SIM-Karte sein kann, als völlig unabhängiges eigenes Mobiltelefon benutzt werden, wenn es nach der Entnahme aus der Halterung 2 mit dem Zusatzteil 19 ergänzt wird. Hieraus ergibt sich eine sinnvolle weitere Nutzungsmöglichkeit für das zunächst nur zur Steuerung der Freisprecheinrichtung konzipierte Steuergerät mit dem optional erhältlichen Zusatzteil 19.

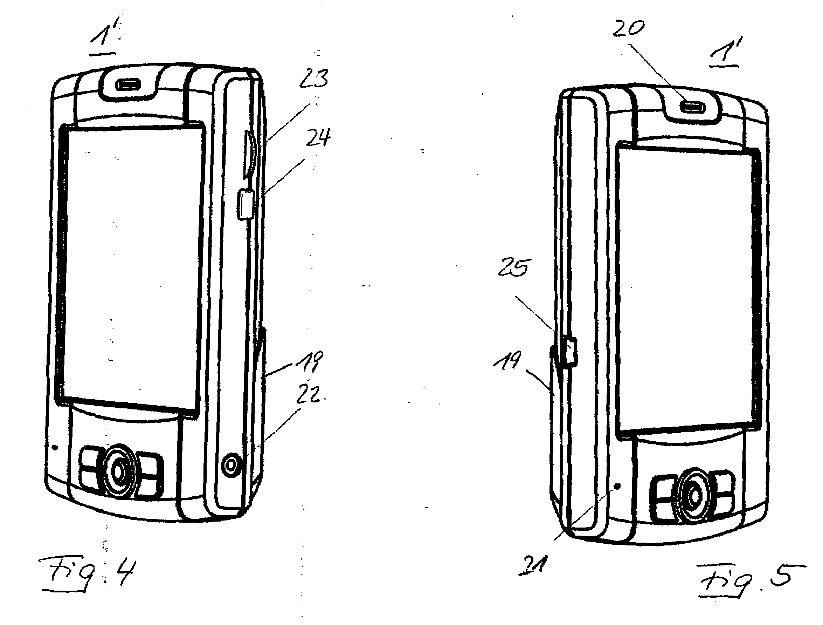

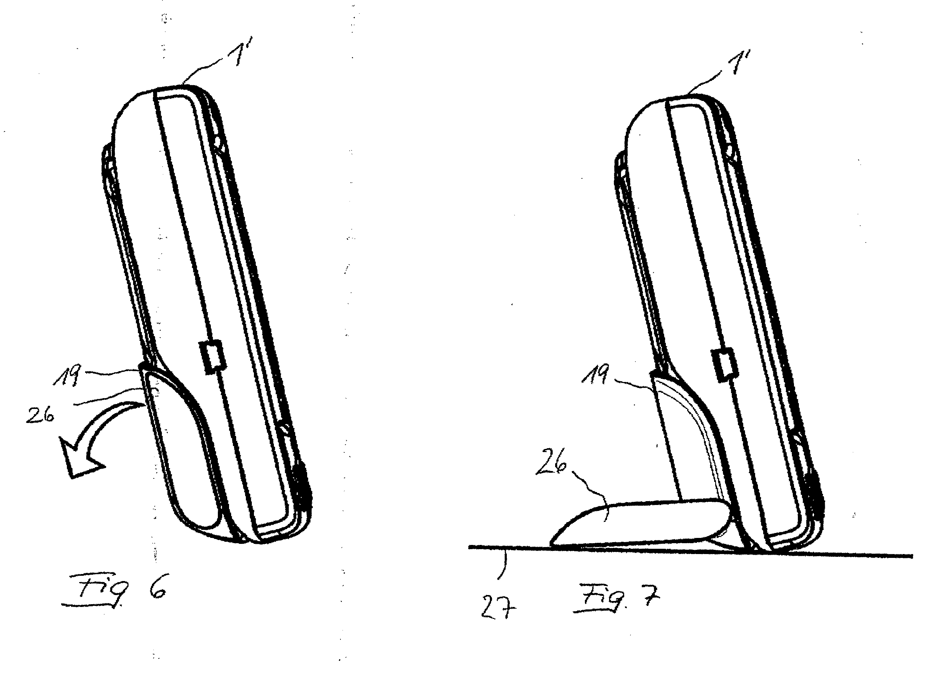

Das in den Figuren 4 und 5 dargestellte weitere Ausführungsbeispiel eines Steuergeräts 1' verdeutlicht, dass das Steuergerät mit zahlreichen weiteren Funktionen, beispielsweise eines PDA (Personal Digital Assistant) ausgestattet sein kann.

Insbesondere ist das Steuergerät 1' mit einem Lautsprecher 20 und einem Mikrofon 21 versehen, die vorzugsweise abschaltbar sind, wenn das Steuergerät 1' in die Halterung (2) eingesetzt wird.

Das Steuergerät 1' lässt ferner weitere Anschlüsse und Bedienelemente erkennen, beispielsweise einen Anschluss 22 für einen Kopfhörersatz, durch den ein Telefonat mit dem Steuergerät 1' über einen externen Kopfhörer mit Mikrofon geführt werden kann. Femer ist ein Einstellrad 23 erkennbar, mit dem die Wiedergabelautstärke über den Lautsprecher 20 einstellbar ist. Mit einer Taste 24 kann ferner eine Diktatfunktion (Aufnahme) gesteuert werden.

Femer ist das Steuergerät 1' mit einem Anschluss 25, vorzugsweise als Mini-USB-Anschluss, für die Übertragung von Daten ausgestattet. Auf diese Weise können beispielsweise Adressdaten und Telefonnummern, die auf einem PC oder einem ähnlichen Gerät gespeichert sind, auf das Steuergerät 1' übertragen werden, sodass sie, beispielsweise im Telefonbuch des Steuergeräts 1' zur Verfügung stehen, ohne in das Steuergerät 1' separat eingegeben werden zu müssen. Selbstverständlich sind beliebige andere Erweiterungen des Steuergeräts 1' denkbar, um komfortable Anwendungen des Steuergeräts 1' nach Herausnahme des Steuergeräts 1' aus der Halterung 2 zu ermöglichen.

Bei dem in den Figuren 6 und 7 dargestellten Ausführungsbeispiel ist auf das Steuergerät 1' das Zusatzteil 19 aufgeschoben, wie dies in den Figuren 3 bis 5 auch verdeutlicht ist. Das Zusatzteil 19 weist jedoch ein nach unten herausklappbares Gehäuseteil 26 auf, das in Richtung des in Figur 6 dargestellten Pfeils um eine am unteren Ende des Zusatzteils 19 - und damit des Steuergeräts 1' - befindliche Drehachse verschwenkbar ist.

Figur 7 zeigt das Gehäuseteil 26 im herausgeschwenkten Zustand, in dem das Gehäuseteil 26 mit dem Zusatzteil 19 einen Ständer für das Steuergerät 1' bildet, mit dem das Steuergerät 1' auf einer ebenen Unterlage 27 aufstellbar ist. Die Stabilität des so gebildeten Ständers 19, 26 wird entweder dadurch erreicht, dass das Gehäuseteil 26 schwergängig in dem Zusatzteil 19 gelagert ist, sodass es durch das Gewicht des Steuergeräts 1' nicht auf das Zusatzteil 19 zurückgeklappt werden kann, oder dass die Herausklappbewegung des Gehäuseteils 26 in eine Raststellung erfolgt, die durch einen üblichen Rastmechanismus, beispielsweise in Form einer geeigneten Steuerkurve in Verbindung mit einem auf der Steuerkurve federbelastet verfahrbaren Steuernocken o. ä., gebildet ist.

## Patentansprüche

1. Freisprechanlage für Mobiltelefone, mit einer eine Kontakteinheit aufweisenden Halterung (2), die über die Kontakteinheit eine Verbindung zu einem Mobiltelefon herstellt und die mit einer Zentraleinrichtung verbunden ist, an die externe Einrichtungen anschließbar sind, **dadurch gekennzeichnet, dass** in die Halterung (2) ein Steuergerät (1) einsetzbar ist, das eine Erkennungseinrichtung für SIM-Daten des Mobiltelefons und eine eigene Telefonsende und empfangseinheit aufweist und über die Kontakteinheit der Halterung (2) mit einer Stromversorgung und mit den an die Zentraleinrichtung anschließbaren externen Einrichtungen verbindbar ist.

2. Freisprechanlage nach Anspruch 1, **dadurch gekennzeichnet, dass** das Steuergerät (1) eine drahtlose Datenkommunikationseinrichtung zur Herstellung einer direkten drahtlosen Kommunikationsverbindung zu einem eine entsprechende Datenkommunikationseinrichtung aufweisenden Mobiltelefon aufweist.

3. Freisprechanlage nach Anspruch 1 oder 2, **dadurch gekennzeichnet, dass** das Steuergerät (1) ein Display (12) zum Eingeben von Steuerbefehlen aufweist.

4. Freisprechanlage nach einem der Ansprüche 1 bis 3, **dadurch gekennzeichnet, dass** die Erkennungseinrichtung für die SIM-Daten des Mobiltelefons an die Datenkommunikationseinrichtung angeschlossen ist.

5. Freisprechanlage nach einem der Ansprüche 1 bis 3, **dadurch gekennzeichnet, dass** die Erkennungseinrichtung für die SIM-Daten des Mobiltelefons ein eigener SIM-Kartenleser ist.

6. Freisprechanlage nach einem der Ansprüche 1 bis 5, **dadurch gekennzeichnet, dass** das Steuergerät (1) in die Halterung (2) durch Rastung einsetzbar und arretierbar ist.

7. Steuergerät für eine Freisprechanlage für Mobiltelefone, die eine mit einer Kontakteinheit versehene Halterung aufweist, die mit einer Zentraleinrichtung verbunden ist, an die externe Einrichtungen anschließbar sind, **dadurch gekennzeichnet, dass** das Steuergerät zum unmittelbaren Einsetzen in die Halterung (2) und zum Kontaktieren der Kontakteinheit der Halterung (2) mittels einer entsprechenden Kontakteinheit ausgebildet ist, dass es eine Erkennungseinrichtung für SIM-Daten eines Mobiltelefons und eine eigene Telefonsende- und -empfangseinheit aufweist und über die Kontakteinheit der Halterung (2) mit einer Stromversorgung und mit den an die Zentraleinrichtung anschließbaren externen Einrichtungen verbindbar ist.

8. Steuergerät nach Anspruchs 7, **dadurch gekennzeichnet, dass** es nach der Entnahme aus der Halterung (2) als vollständiges Mobiltelefon einsetzbar ist.

9. Steuergerät nach Anspruch 7 oder 8, **dadurch gekennzeichnet, dass** es ein Zusatzteil (19) aufweist, das zur Abdeckung der Kontakteinheit des Steuergeräts (1) mit dem Steuergerät (1) verbindbar ist.

10. Steuergerät nach Anspruch 9, **dadurch gekennzeichnet, dass** das Zusatzteil (19) wenigstens ein Funktionsteil enthält, mit dem das Steuergerät (1) zu einem vollständigen Mobiltelefon ergänzt wird.

11. Steuergerät nach Anspruch 10, **dadurch gekennzeichnet, dass** in dem Zusatzteil (19) wenigstens eine Antenne angeordnet ist.

12. Steuergerät nach einem der Ansprüche 7 bis 11, **dadurch gekennzeichnet, dass** das Zusatzteil (19) zusätzlich einen aufladbaren Akkumulator als selbstständige Stromversorgung für das Steuergerät (1) enthält.

13. Steuergerät nach einem der Ansprüche 7 bis 12, **dadurch gekennzeichnet, dass** es selbst mit einem von der Stromversorgung aufladbaren Akkumulator versehen ist.

14. Steuergerät nach einem der Ansprüche 9 bis 13, **dadurch gekennzeichnet, dass** das Zusatzteil (19) ferner mit einer Eingabetastatur für das Steuergerät (1) ausgestattet ist.

15. Steuergerät nach einem der Ansprüche 7 bis 14, **dadurch gekennzeichnet, dass** es ein Display (12) zur Eingabe von Steuerbefehlen aufweist.

16. Steuergerät nach Anspruch 15, **dadurch gekennzeichnet, dass** das Display (12) als Touch Screen zur Eingabe von Daten und/oder Befehlen ausgebildet ist.

17. Steuergerät nach einem der Ansprüche 7 bis 16, **dadurch gekennzeichnet, dass** die Erkennungseinrichtung für die SIM-Daten des Mobiltelefons ein eigener SIM-Kartenleser ist.

18. Steuergerät nach einem der Ansprüche 7 bis 17, **dadurch gekennzeichnet, dass** es in die Halterung (2) durch Rastung einsetzbar und arretierbar ist.

19. Steuergerät nach einem der Ansprüche 7 bis 18, **dadurch gekennzeichnet, dass** das Zusatzteil (19) als Ständer ausgelegt ist.

20. Steuergerät nach Anspruch 9, **dadurch gekennzeichnet, dass** das Zusatzteil (19) ein derart ausklappbares Gehäuseteil aufweist, dass durch das Ausklappen das Zusatzteil (19) als Ständer fungiert.
